# EUROPEAN PATENT APPLICATION

(11) **EP 0 863 031 A2**
(43) Date of publication of application: **09.09.1998**
(21) Application number: 98300451.6
(22) Date of filing: 22.01.1998
(51) Int. Cl.: B60H 1/00

(54) **Heat exchanger assembly**

(30) Priority: 07.03.1997 JP 70501/97
(71) Applicant: Sanden Corporation, Isesaki-shi, Gunma 372-8502 (JP)
(72) Inventor: Sakano, Akira, Isesaki-shi, Gunma 372-0052 (JP)
(74) Representative: Jackson, Peter Arthur

(57) **Abstract**

On the lateral surface of a pair of header pipes of a heat exchanger (1) are provided straight axial flanges (15). The heat exchanger (1) is supported and fixed by inserting these straight flanges (15) into vertical slits (18,19) provided in the external supporting structure within the engine room of an automobile. By this mounting structure of the heat exchanger, the cost price of brackets and of the manual process of attaching the brackets to the header pipe body, which has been a considerable obstacle to the cost reduction, can be eliminated.

## Description

The present invention relates to a mounting of a heat exchanger for a vehicular air conditioning system, which can reduce the number of brackets that are usually attached to the heat exchanger for fixing the heat exchanger to a supporting structure.

Generally, a multi-flow type heat exchanger used for a vehicular air conditioning system comprises a pair of header pipes, a plurality of heat exchange tubes that interconnect the header pipes, and a plurality of corrugated fins that are provided between the heat exchange tubes. On the two header pipes are attached an inlet pipe and an outlet pipe respectively. Also on the two header pipes are attached a plurality of brackets which fix the heat exchanger body onto the external supporting structure.

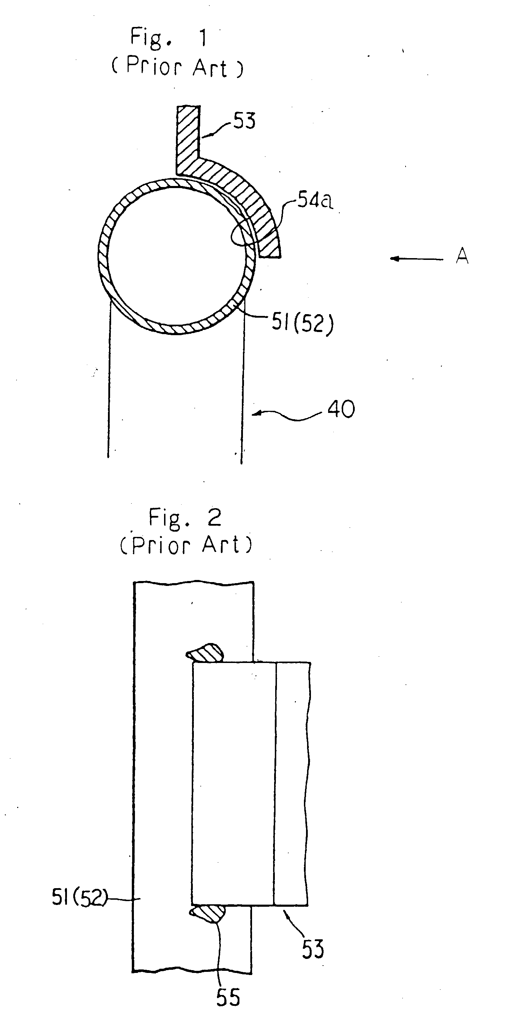

In Fig.1, a cross sectional view of a header pipe part of a conventional heat exchanger is shown. On the header pipe 51(52) is attached a bracket 53 by brazing. Thus the heat exchanger body 40 is fixed to the external supporting structure (not shown) by these brackets 53. Now, the precision of the arched surface 54a of the bracket 53, that is adjacent to the surface of the header pipe 51(52), has to be sufficiently high. Because, if there occurs a gap greater than about 0.1mm at any part in the surface contact region between the surface of the header pipe 51(52) and the arched surface 54a, the brazing material cannot flow into that gap, so that the attachment of the bracket 53 to the header pipe 51(52) is incomplete. The consequence of this defect is serious. Generally, the weight of the heat exchanger used for a vehicular air conditioning system, exceeds 2 kg. The mounting of the heat exchanger to the automobile must endure the vibration associated with the car when running. If the mounting of the heat exchanger involves any defects, it will break sooner or later.

Accordingly, the bracket 53 has to be manufactured so as to maintain high precision of the arched surface 54a. For this purpose, the bracket 53 is generally made by extrusion. However an extruded part is very expensive, and it has long been desired to overcome this problem.

In addition, as seen in Fig. 2, the bracket 53 is usually attached to the header pipe 51(52) temporarily by MIG welding before the brazing. This process of temporary fixing needs a high precision jig that positions the bracket correctly on the header pipe, and must be done manually. Therefore, this process is expensive. Furthermore, there remain welding beads 55 at the place of MIG welding. These welding beads are unfavourable for the appearance of the heat exchanger.

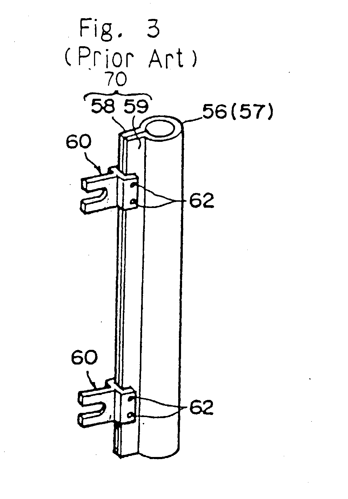

Thus, a solution has long been sought to improve the mounting of a heat exchanger, from the point of view of cost and external appearance. A solution to this problem is disclosed in Japanese Utility Model publication Hei 3-64375, of which the structure is shown in Fig.3. According to this structure, a header pipe body 56(57) is made by curling a rectangular plate to form a pipe shape. At the same time, a straight flange 70 which protrudes from the header pipe body 56(57), is formed by folding partially, and attaching together, the right and left side parts 58,59 of the original rectangular plate. Brackets 60 are attached at predetermined positions on the straight flange 70 by bolts 62. The brackets 60 are then fixed to the external supporting structure ( not shown.)

This mounting of a heat exchanger solves the above-mentioned problems such as the high precision requirement of the arched surface of the bracket, and welding beads associating the MIG welding. However, the bracket of the shape shown in Fig.3 is still made by extrusion. And each bolt 62 is driven manually. So the cost price of the bracket and the cost price of the manual process of driving the bolts for attaching the bracket to the header pipe have remained an obstacle to reducing the overall cost.

Accordingly, it is an object of the present invention to provide a heat exchanger mounting that has fewer or no brackets. Another object of the present invention is to provide a mounting whereby a heat exchanger is easily fixed to external supporting structure within an automobile.

According to the present invention, a heat exchanger assembly comprises a heat exchanger which has, on opposite edges, outwardly projecting straight flanges; and a supporting structure of a vehicle on which the heat exchanger is mounted via the straight flanges; characterised in that the supporting structure has slits in which the straight flanges are received.

The heat exchanger body is mounted by the insertion of the straight flanges into the slits. Therefore, no brackets are necessary. At the same time, since the slits act as guiding rails, the heat exchanger body can be easily fitted into the automobile.

Cushions may be provided at the slit portions in order to give an anti-vibrational endurance. Thus the slits may be formed in damping members made of elastic material.

Means for restricting movement of the heat exchanger within the slits, may be provided. Thus the arrangement may be such that during mounting of the heat exchanger, at least one of the straight flanges slides through a double open ended slit, the entry end of which is thereafter closed by a plate, releasably fixable to the supporting structure, to present subsequent withdrawal of the flange through the slit.

Simply, each of the straight flanges is received in spaced slits in two parts of the supporting structure, one slit being double open ended and the other slit being blind whereby, during mounting of the heat exchanger, the flange can slide through the one slit and into the other slit, and thereafter be held by both slits.

Although each straight flange may engage two spaced aligned slits, there may be instances in which it is convenient for the two slits to be offset out of alignment with one another. In that case a solution is for the straight flange to be received in one slit and a flange of an adaptor, fitted to the straight flange, to be received in the other slit.

In the accompanying drawings:
Fig. 1 is a cross sectional view of a header pipe part of a conventional heat exchanger;
Fig. 2 is a side view as seen on the arrow A in Fig. 1;
Fig.3 is a perspective view of a header pipe part of another conventional heat exchanger;
Fig. 4 is a perspective view of a heat exchanger which is mounted according to the present invention;
Fig.5 is a process chart illustrating the manufacture of the header pipe of the heat exchanger shown in Fig. 4;
Fig. 6 is a perspective view showing the mounting of a heat exchanger according to a first embodiment of the present invention;
Fig. 7 is a perspective view showing the mounting of a heat exchanger according to a second embodiment of the present invention;
Fig. 8 is a perspective view showing the mounting of a heat exchanger according to a third embodiment of the present invention;
Fig. 9 is a perspective view showing the mounting of a heat exchanger according to a forth embodiment of the present invention;
Fig.10 is a perspective view showing the mounting of a heat exchanger according to a fifth embodiment of the present invention; and,
Fig. 11 is a top view of the fifth embodiment.

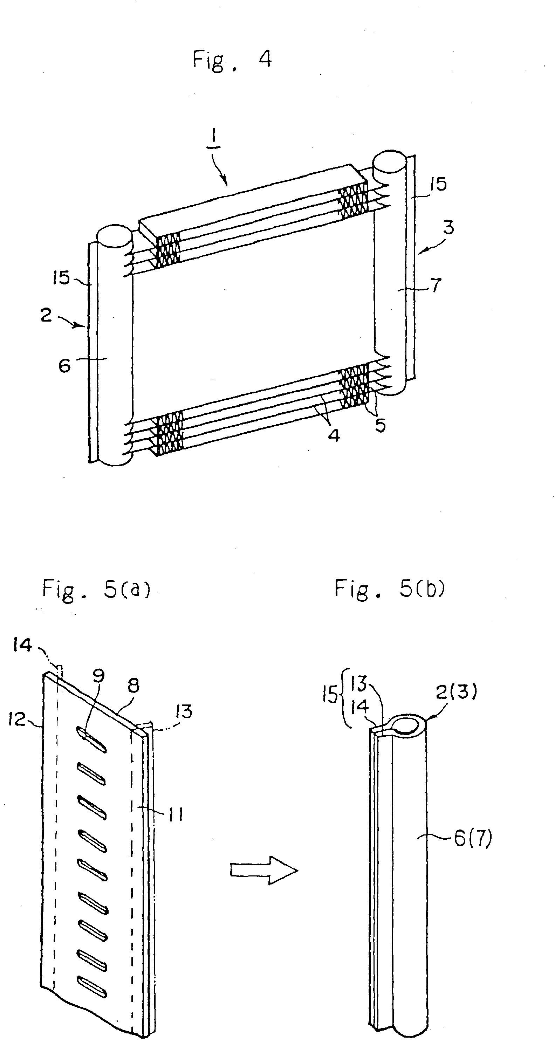

As shown in Fig. 4, a heat exchanger 1 comprises a pair of header pipe 2,3, a plurality of heat exchange tubes 4, which provide a mechanical and fluid interconnection between are interconnecting the two header pipes 2,3, and a plurality of corrugate fins 5 which are sandwiched by the heat exchange tubes 4. On the outer flanks of the header pipe bodies 6, 7 are provided laterally projecting, axially extending straight flanges 15.

One example of the manufacturing process for the header pipes 2,3 is illustrated in Fig.5. With reference to Fig.5(a), a plurality of slits 9 for inserting the heat exchange tubes 4 are punched out of a rectangular plate 8. At the same time, side portions 11, 12 of the rectangular plate 8 are folded backward along the broken lines indicated in the figure, to become parts 13 and 14. Next, the portion between the parts 13 and 14 is curled. Then the header pipe 2(3) will be obtained as shown in Fig. 5(b) with a straight flange 15 formed by the parts 13 and 14. The header pipe 2(3) consists of the header pipe body 6(7) and the straight flange 15. Practically, the sealing and fixing between the facing surfaces of the part 13 and 14 is made during the brazing process of the whole heat exchanger.

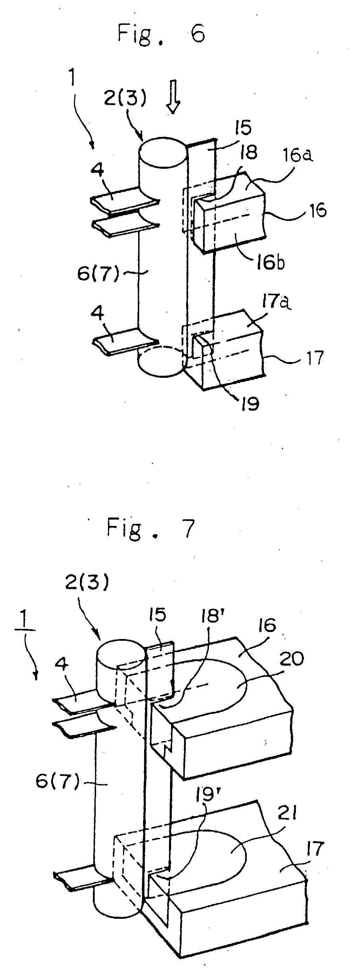

Fig. 6 shows a first embodiment of the present invention (only one header pipe is shown). External supporting members 16, 17 are parts of the frame of an automobile or its engine. A double open ended slit 18 is provided in the supporting member 16 extending from the upper surface 16a to the lower surface 16b. A blind single open ended slit 19 is provided in the supporting member 17 extending from the upper surface 17a to an intermediate point in the supporting member 17. The heat exchanger 1 can be easily mounted by inserting the straight flanges 15 of both header pipes downwards so that they slide through the slits 18 and into the slits 19.

Fig. 7 shows a second embodiment of the present invention. In the supporting member 16, a damping member 20, made of an elastic material, is fitted. A double open ended slit 18' is provided centrally in the damping member 20. In the supporting member 17, a damping member 21 made of elastic material is fitted. A single open ended slit 19' is provided centrally in the damping member 21. The heat exchanger 1 can be fixed by inserting the straight flange 15 into the slits 18' and 19'. In this case, since the heat exchanger 1 is held and supported by the damping members 20 and 21, the endurance of the mounting structure against vibration is high.

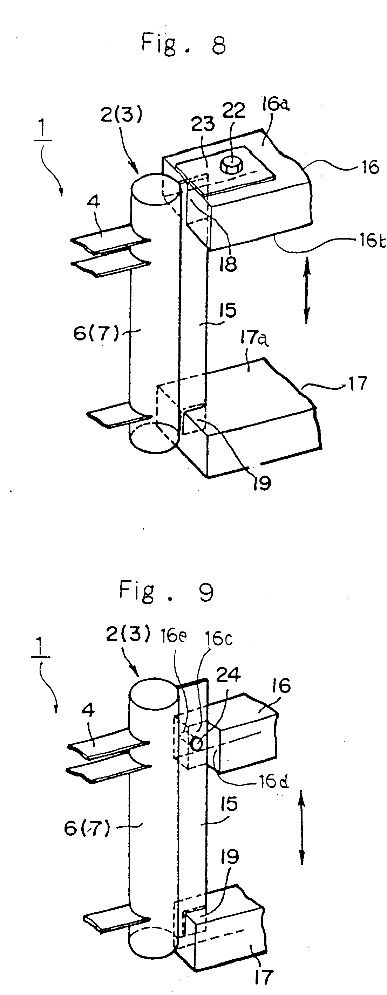

Fig. 8 shows a third embodiment of the present invention. A double open ended slit 18 is provided in the supporting member 16 extending from the upper surface 16a to the lower surface 16b. A single open ended slit 19 is provided in the supporting member 17 extending from the upper surface 17a to an intermediate point in the supporting member 17. The heat exchanger 1 can be easily mounted by inserting the straight flange 15 into the slits 18 and 19. Further, a plate 23 which is fixed by a bolt 22 on the upper surface 16a of the supporting member 16, effectively restricts movement of the heat exchanger 1, in all directions.

Fig. 9 shows a fourth embodiment of the present invention. An angular recess, formed by two cut faces 16c,16d, is provided in the supporting member 16. On the cut face 16c, a hole 16e for putting in a rubber clamp 24 is provided. By means of the clamp 24, the heat exchanger 1 is secured and the vertical movement of the heat exchanger 1 is effectively restricted. Furthermore, by detaching the clamp 24, the heat exchanger 1 can easily be taken out of the slit 19.

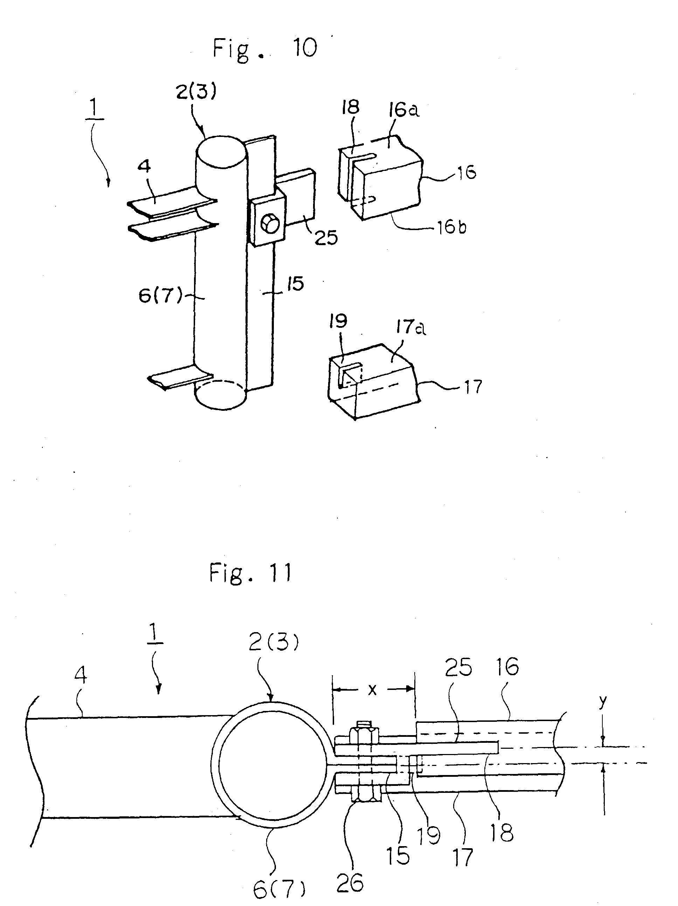

Fig. 10 shows a fifth embodiment of the present invention. A double open ended slit 18 is provided in the supporting member 16 extending from the upper surface 16a to the lower surface 16b. A single open ended slit 19 is provided in the supporting member 17 extending from the upper surface 17a to an intermediate point in the supporting member 17. With reference to Fig. 11, in some cases, the position of the slit 18 in the supporting member 16 and the position of the slit 19 in the supporting member 17 may not be aligned, but are offset from each other e.g., by the distance x in the lateral direction, and y in the fore and aft direction. In order to bridge this gap, an adaptor stay 25 is provided and attached to the straight flange 15 by a bolt 26. One flanged end of the stay 25 is inserted into the slit 18, while the straight flange 15 is inserted into the slit 19.

## Claims

1. A heat exchanger assembly comprising a heat exchanger (1) which has, on opposite edges, outwardly projecting straight flanges (15); and a supporting structure (16,17) of a vehicle on which the heat exchanger is mounted via the straight flanges; characterised in that the supporting structure has slits (18,19) in which the straight flanges are received.

2. An assembly according to claim 1, wherein the slits (18,19) are formed in damping members (20,21) made of elastic material.

3. An assembly according to claim 1 or claim 2, wherein during mounting of the heat exchanger, at least one of the straight flanges (15) slides through a double open ended slit (18), the entry end of which is thereafter closed by a plate (23) , releasably fixable to the supporting structure (16), to present subsequent withdrawal of the flange through the slit.

4. An assembly according to any one of the preceding claims, wherein each of the straight flanges (15) is received in spaced slits (18,19) in two parts (16,17) of the supporting structure, one slit (18) being double open ended and the other slit (19) being blind whereby, during mounting of the heat exchanger, the flange can slide through the one slit and into the other slit, and thereafter be held by both slits.

5. An assembly according to claim 4, wherein the straight flanges (15) extend substantially vertically and the one slit (18) is above the other slit (19).

6. An assembly according to claim 1 or claim 2, wherein at least one of the straight flanges (15) cooperates with spaced non-aligned slits (18,19) in two parts (16,17) of the supporting structure, the straight flange (15) being received in one slit (19) and a flange of an adaptor (25), fitted to the straight flange (15) being received in the other slit (18).

7. An assembly according to any one of claims 1 to 3, wherein at least one straight flange (15) is partially supported by a clamp (24) in an angular recess (16c,16d) formed in a part of the supporting structure.

8. An assembly according to any one of the preceding claims, wherein the heat exchanger (1) comprises spaced, substantially parallel header pipes (2,3) interconnected by heat exchanger tubes (4), the straight flanges (15) projecting laterally from, and extending axially along, the header pipes (2,3).
